# EUROPÄISCHE PATENTSCHRIFT

(11) **EP 1 792 382 B1**
(45) Veröffentlichungstag und Bekanntmachung des Hinweises auf die Patenterteilung: **16.02.2011**
(21) Anmeldenummer: 05764035.1
(22) Anmeldetag: 19.07.2005
(51) Int. Cl.: H02K 11/02

(54) **GLEICHSTROMMOTOR MIT ENTSTÖRVORRICHTUNG**
DC MOTOR WITH SUPPRESSOR
MOTEUR A COURANT CONTINU AVEC DISPOSITIF D'ANTIPARASITAGE

(30) Priorität: 06.09.2004 DE 102004043593; 24.09.2004 DE 102004046299
(43) Veröffentlichungstag der Anmeldung: 06.06.2007
(73) Patentinhaber: ROBERT BOSCH GMBH, 70442 Stuttgart (DE)
(72) Erfinder: PREISSL, Reinhold, 70439 Stuttgart (DE); WINKLER, Wolfgang, 77746 Schutterwald (DE); MAURER, Erik, 77830 Buehlertal (DE); KUECHEN, Tobias, 79312 Emmendingen (DE); SILVA, Fernando, 77815 Buehl (DE)
(86) Internationale Anmeldenummer: PCT/EP2005/053479
(87) Internationale Veröffentlichungsnummer: WO 2006/027290

(56) Entgegenhaltungen:
- EP-A- 1 503 484
- DE-A1- 10 014 474
- US-A- 4 384 223
- US-B1- 6 307 344
- US-B1- 6 768 243

## Beschreibung

Die Erfindung betrifft einen Gleichstrommotor gemäß dem Oberbegriff des Anspruchs 1, insbesondere für eine Gebläseeinrichtung eines Kraftfahrzeugs, mit einem Polgehäuse, mehreren die Kontaktierung zu einem Kollektor bewirkenden Kontaktelementen und einer der Reduzierung und/oder Eliminierung von leitungsgebundenen elektrischen Störsignalen dienenden Entstörvorrichtung.

### Stand der Technik

Gleichstrommotoren der eingangs genannten Art sind bekannt, beispielsweise in der Ausführung als zweipoliger Bürsten-Gleichstrommotor. Derartige Gleichstrommotoren haben eine Vielzahl von Anwendungen und werden insbesondere in der Kraftfahrzeugtechnik in einer elektromagnetisch entstörten Bauweise benötigt. Dabei ist es bekannt, die Entstörung durch eine Anordnung mehrerer Elemente zwischen den Kontaktelementzuleitungen und den Motoranschlüssen "Plus" und "Minus" zu bewirken. Dabei wird für die Entstörung im Mittelwellen-, Kurzwellen- und Ultrakurzwellenbereich jedem der Kontaktelemente eine Drossel in Reihe geschaltet und zur Entstörung im Langwellenbereich ein Kondensator parallel zu den Kontaktelementzuleitungen geschaltet. Nachteilig ist dabei jedoch, dass eine solche Anordnung aus relativ vielen Einzelbauteilen besteht und bei der Herstellung eine Vielzahl an Verarbeitungsschritten unter Einsatz verschiedener Verbindungsprozesse erfordert. Die einzelnen Bauteile müssen größtenteils manuell relativ zueinander positioniert und dann montiert werden, sodass eine Automatisierung nur sehr aufwendig bei erheblichem Kostenaufwand möglich ist.

Die US 6,307,344 B1 beschreibt eine Schaltungsanordnung zur Interferenzunterdrückung für einen elektrischen Motor. Die Schaltungsanordnung umfasst ein Gehäuse, in welchem eine Ringspule und Durchführungskondensatoren angeordnet sind, wobei die Durchführungskondensatoren mit dem Gehäuse und der Ringspule elektrisch verbunden sind, um einen Filter auszubilden.

Die DE 100 14 474 A1 betrifft ein Zugentlastungsbauteil mit integriertem Kondensator. Das Zugentlastungsbauteil weist insofern einen Kondensator zur elektromagnetischen Entstörung auf, wobei ein Kontaktelement vorgesehen ist, das in elektrischem Kontakt mit dem Kondensator steht. Dabei soll eine Kontaktierung wenigstens einer Zuleitung dadurch erfolgen, dass das Kontaktelement die Isolierung der Zuleitung durchdringt.

US 4,384,223 beschreibt eine weitere Entstörvorrichtung in einem Gleichstrommotor.

Die vorliegende Erfindung ist ein Gleichstrommotor mit einer Entstörvorrichtung gemäss dem unabhängigen Anspruch 1. Vorteilhafte Ausgestaltungen der Erfindung sind Gegenstand der abhängigen Ansprüche 2-11.

### Vorteile der Erfindung

Erfindungsgemäß weist die Entstörvorrichtung des Gleichstrommotors mindestens einen Durchführungskondensator auf, der in einem elektrischen Pfad mindestens einer Anschlussleitung angeordnet ist. Durchführungskondensatoren sind aus dem Stand der Technik bekannt und sollen hier nicht näher erläutert werden. Es sei lediglich angemerkt, dass es sich bei Durchführungskondensatoren um Vierpol-Kondensatoren handelt, die für mindestens einen Belag zwei elektromagnetisch weitgehend entkoppelte Zuführungen aufweisen. Der Kondensator ist dabei so zwischen den Zuführungen angeordnet, dass eine kapazitive Kopplung zwischen den beiden Zuführungen bewirkt wird. Erfindungsgemäß werden zwei Pole einer der Zuführungen des Durchführungskondensators auf das gleiche Potenzial geschaltet, insbesondere auf ein Massepotenzial, während die andere Zuführung den Nutzstrom führt. Auf diese Weise lässt sich die genannte Entstörvorrichtung besonders einfach mittels Standard-Elektronikkomponenten beziehungsweise Standardtechnologien herstellen.

Die Entstörvorrichtung weist zudem ein Masseblech auf, welches dem Durchführungskondensator zugeordnet ist. Eine derartige Anordnung verbessert die Entstöreigenschaften der Entstörvorrichtung und bietet gute Möglichkeiten der Befestigung beziehungsweise Anordnung des Durchführungskondensators. So ist es bevorzugt, eine Wanne als Einzug auf dem Masseblech auszubilden, in das der Durchführungskondensator eingesetzt, mit dem Masseblech kontaktiert und dann schützend vergossen wird. Die Beaufschlagung des Masseblechs mit einem Massepotenzial kann auf vielfältige Weise erfolgen, beispielsweise mittels eines Kabels oder mittels eines direkten Kontakts zu einem masseführenden Element.

Die Entstörvorrichtung ist an einem als Bürstenhalter ausgebildeten Halter angeordnet und mittels Kontaktabschnitten elektrisch mit dem Polgehäuse verbunden. Dadurch kann die Entstörvorrichtung mit dem Halter vormontiert bezogen werden, wodurch ein Montageschritt entfällt. Hierbei ist die Entstörvorrichtung vorzugsweise mit zwei Seitenwänden in Schlitzen einer Aufnahme des Halters angeordnet ist, wobei in den Seitenwänden vorzugsweise Einrastöffnungen für Rasthaken der Aufnahme angeordnet sind.

Eine einfache und sichere Montage des Durchführungskondensators ergibt sich, wenn in dem Masseblech der Entstörvorrichtung wenigstens ein Durchbruch für den Durchführungskondensator ausgebildet ist, wobei der Durchbruch vorzugsweise mit Laschen zum Einfügen, Zentrieren und/oder Verrasten des Durchführungskondensators versehen ist.

Vorteilhafterweise ist die Entstörvorrichtung der Polgehäuseöffnung zugeordnet, insbesondere in die Polgehäuseöffnung eingesetzt. Dadurch ergibt sich eine besonders günstige Positionierung der Entstörvorrichtung, da für die Entstörvorrichtung innerhalb beziehungsweise außerhalb des Polgehäuses lediglich ein minimaler zusätzlicher Bauraum erforderlich ist. Zudem ist die vorgeschlagene Zuordnung der Entstörvorrichtung technisch vorteilhaft, da die Entstörvorrichtung so aufgrund ihrer räumlichen Ausdehnung, insbesondere bei Verwendung des zuvor genannten Masseblechs, auch Störstrahlung, die vom Motor ausgeht, reduziert und/oder eliminiert. Zudem lässt sich die zuvor genannte Anbindung an ein Massepotenzial so besonders einfach realisieren, da das Polgehäuse in aller Regel bereits mit einem Massepotenzial verbunden ist.

Mit Vorteil sind die Kontaktelemente, insbesondere in der Ausführung als Kohlekontakte beziehungsweise Kohlebürsten, mit den Anschlussleitungen form- und/oder kraftschlüssig verbunden. Dabei ist es insbesondere bevorzugt, die Kohlebürsten an die Anschlussleitungen anzupressen, wobei auch das Litzenseil eines Kontaktelements beziehungsweise einer Kohlebürste als Anschlussleitung der Entstörvorrichtung genutzt werden kann.

Bei einer vorteilhaften Weiterbildung der Erfindung ist das Masseblech mit Halteelementen, insbesondere Blechlappen, zum Einschieben, Klemmen und/oder Stecken in die Polgehäuseöffnung ausgebildet. Dabei ist es insbesondere vorteilhaft, wenn das Masseblech an den äußeren Rändern federnde Blechlappen aufweist, die so ausgeformt sind, dass sie unter Vorspannung am Polgehäuse befestigt werden und somit dort für eine dauerhafte Masseanbindung gewährleisten.

Vorteilhafterweise sind die Anschlussleitungen zur Reduzierung einer Schallübertragung zumindest abschnittsweise flexibel ausgebildet. Obgleich es möglich ist, die Anschlussleitungen vollständig flexibel auszubilden, ist es zum Zwecke der Geräuschentkopplung hinreichend, durch flexible Abschnitte in den Anschlussleitungen die Schallübertragung zu unterbinden. Die Integration von mechanisch flexiblen Anschlussleitungen kann insbesondere durch die Litzenseile der Kontaktelemente beziehungsweise der Kohlebürsten realisiert werden (flexibles Kupferlitzenseil). Die Geräuschentkopplung von Gleichstrommotoren ist in der Kraftfahrzeugtechnik insbesondere für Gebläsemotoren gewünscht, die während des Fahrzeugbetriebs oftmals im Dauerbetrieb sind.

Bevorzugt ist es, dass eine dem Anschluss an ein negatives Spannungspotenzial dienende Anschlussleitung (Minus-Leitung) einen elektrischen Kontakt zum Masseblech aufweist. Damit lässt sich die Masseanbindung der vom negativ gepolten Kontaktelement aus dem Polgehäuse herausführenden Anschlussleitung in unmittelbarer Nähe des Gleichstrommotors bewirken. Wird die Ausführungsform gewählt, bei der das Masseblech in die Polgehäuseöffnung eingesetzt wird, so findet die Entstörung der Minus-Leitung unmittelbar im oder am Polgehäuse statt.

Vorteilhafterweise weist das Masseblech eine Anschlusszunge zur elektrischen Kontaktierung und/oder Zugentlastung der Minus-Leitung auf. Dabei weist das Masseblech insbesondere eine Ausstanzung in Form eines Balkens (Anschlussbalken) auf. Diese Anschlusszunge beziehungsweise Anschlussbalken wird benötigt, um die Anschlussleitung (zum Beispiel Kohlelitzenseil oder Kupferlitzenseil) des Minus-Kontaktelements elektrisch zu verbinden und gleichzeitig mechanisch auf Zug zu entlasten. Die Zugentlastung wird dadurch bewirkt, dass die Anschlusszunge einen Kragen aufweist, der die Anschlussleitung zumindest teilweise umschließt und kraftschlüssig festhält. Bei Verwendung einer nicht isolierten Anschlussleitung oder einer bereichsweise abisolierten Anschlussleitung wird auf diese Weise gleichzeitig der elektrische Kontakt zwischen der Anschlussleitung und der Anschlusszunge hergestellt. Soll eine isolierte Anschlussleitung kontaktiert werden, so ist es vorteilhaft, wenn der genannte Kragen mindestens einen spitzen und/oder scharfen Vorsprung aufweist, der bei Umschließung der Anschlussleitung durch den Kragen die Isolierschicht der Anschlussleitung durchdringt und die Kontaktierung auf den Leiter der Anschlussleitung bewirkt. Die genannte elektrische Verbindung und/oder mechanische Zugentlastung kann insbesondere als Crimp-, Quetsch-, Schweiß- oder Lötverbindung realisiert sein.

Bei einer Weiterbildung der Erfindung ist jeder Anschlussleitung ein Durchführungskondensator zugeordnet. Dadurch lässt sich die Entstörwirkung der Entstörvorrichtung verbessern. Bei einem zweipoligen Gleichstrommotor bedeutet dies, dass sowohl in der Plus-Leitung als auch in der Minus-Leitung je ein Durchführungskondensator angeordnet wird.

Es sei darauf hingewiesen, dass sich der erfindungsgemäße Gleichstrommotor auch aufgrund eines weiteren Aspekts besonders günstig fertigen lässt. So ist es möglich, die Entstörvorrichtung außerhalb des Gleichstrommotors zu fertigen und dann im -zumindest teilweise- fertig gestellten Zustand am Gleichstrommotor anzuordnen. Die Integration kann insbesondere so weit geführt werden, dass noch vor der Anordnung der Entstörvorrichtung am Gleichstrommotor die Minus-Leitung mit der Anschlusszunge verbunden wird und/oder dass die Kontaktelemente an den Anschlussleitungen angepresst werden. Wird die Kohlebürste an die genannte flexible Anschlussleitung angepresst, sind zusätzliche elektrische Verbindungen überflüssig. Dies erleichtert die Fertigung und reduziert die Herstellungskosten des Gleichstrommotors.

Die elektrische Kontaktierung ist besonders einfach realisierbar, wenn die Kontaktabschnitte an Federzungen angeordnet sind.

### Zeichnungen

Die Erfindung wird nun anhand von Ausführungsbeispielen näher erläutert. Dabei zeigen
- Figur 1: einen nicht erfindungsgemäßen Gleichstrommotor,
- Figur 2: eine Detailansicht einer Entstörvorrichtung,
- Figur 3: eine Detailansicht der Führungen der Anschlussleitungen,
- Figur 4: eine nicht erfindungsgemäße Entstörvorrichtung mit an den An- schlussleitungen angeklemmten Kontaktelementen,
- Figur 5: eine Detailansicht der erfindungsgemäßen Entstörvorrichtung,
- Figur 6: die erfindungsgemäße Entstörvorrichtung im montierten Zustand und
- Figur 7: den Ausschnitt von Figur 6 in einer perspektivischen Darstellung.

### Beschreibung der Ausführungsbeispiele

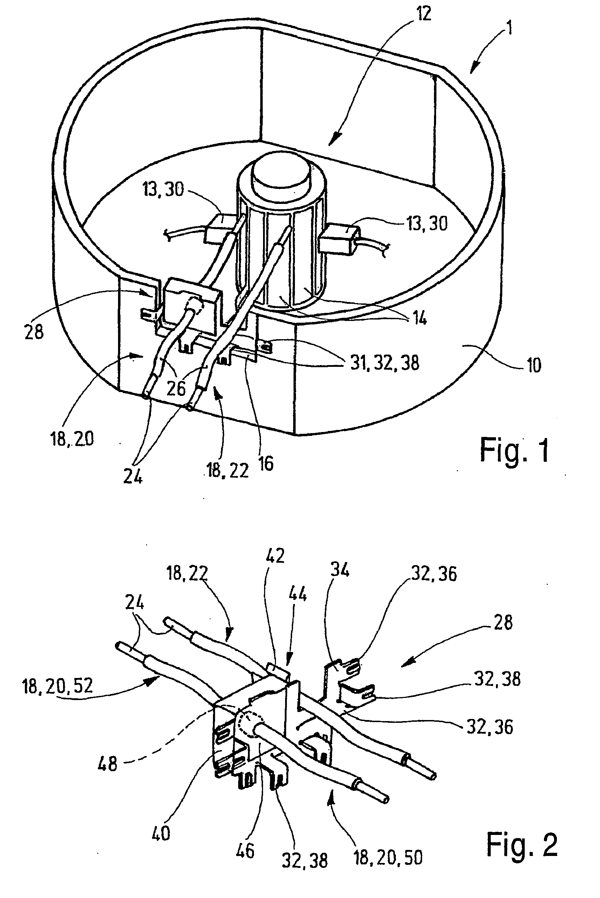

Figur 1 zeigt einen nicht erfindungsgemäßen Gleichstrommotor 1, wobei lediglich relevante Elemente dargestellt wurden. Es sei darauf hingewiesen, dass es sich bei der Figur 1 nicht um eine maßstabsgetreue Darstellung handelt und dass einige Bestandteile des Gleichstrommotors 1, insbesondere der Stator, zum Zwecke der besseren Übersichtlichkeit nicht dargestellt wurden. Der Gleichstrommotor 1 weist folgende Elemente auf:

Ein Polgehäuse 10, einen Kollektor 12 mit mehreren Kollektorlamellen 14, zwei der Kontaktierung des Kollektors 12 beziehungsweise der Kollektorlamellen 14 dienende Kontaktelemente 13, eine Polgehäuseöffnung 16 zur Durchführung elektrischer Anschlussleitungen 18, nämlich einer Plus-Leitung 20 und einer Minus-Leitung 22, wobei jede der Anschlussleitungen 18 einen Leiter 24 und eine den Leiter 24 umgebende Isolierung 26 aufweist, und eine in die Polgehäuseöffnung 16 eingesetzte Entstörvorrichtung 28. Die prinzipielle Funktionsweise eines Gleichstrommotors 1 ist bekannt und soll hier nicht weiter erläutert werden. Es sei lediglich erwähnt, dass während des Betriebs des Gleichstrommotors 1, wenn sich also der Kollektor 12 dreht, die Kollektorlamellen 14 sich an den Kontaktelementen 13, hier als Kohlebürsten 30 ausgeführt, vorbeibewegen, sodass die Kontaktelemente 13 im zeitlichen Verlauf zu unterschiedlichen Paaren von Kollektorlamellen 14 Kontakt haben. Insbesondere während des Wechsels von einem Lamellenpaar zum anderen entstehen eine Störstrahlung und leitungsgebundene Störsignale. Da diese Störsignale entlang der elektrischen Anschlussleitungen 18 aus dem Gleichstrommotor 1 hinauspropagieren und ein elektrisches System, an das der Gleichstrommotor 1 angeschlossen ist, stören können, ist es erforderlich, entstörende Maßnahmen zu ergreifen. Dies wird hier mittels der nicht erfindungsgemäßen Entstörvorrichtung 28 erreicht, die in der Polgehäuseöffnung 16 mittels Halteelementen 31, hier als Blechlappen 32 ausgeführt, klemmend gehalten ist.

Figur 2 zeigt eine Detailansicht der elektrischen Entstörvorrichtung 28. Die Entstörvorrichtung 28 weist die folgenden Bestandteile auf: Ein Masseblech 34, am Masseblech 34 ausgebildete Blechlappen 32, wobei innere Blechlappen 36 mit ihren ungefähr flächigen Ausdehnungen im Wesentlichen in einer ersten Ebene liegen und äußere Blechlappen 38 mit ihren ungefähr flächigen Ausdehnungen im Wesentlichen in einer zweiten Ebene liegen, eine aus dem Masseblech 34 ausgebildete Wanne 40, eine die Minus-Leitung 22 mittels eines Kragens 42 elektrisch kontaktierende und zugentlastende Anschlusszunge 44 und ein in einer Vergussmasse 46 eingebetteter und mit dem Masseblech 34 elektrisch kontaktierter Durchführungskondensator 48. Die Plus-Leitung 20 ist hier in einen ersten, anschlussseitig am Durchführungskondensator 48 angeordneten Anschlussleitungsabschnitt 50 und einen zweiten, gehäuseinnenseitig am Durchführungskondensator 48 angeordneten Anschlussleitungsabschnitt 52 aufgeteilt. Die Minus-Leitung 22 wurde hier bereits montiert, das heißt, die Minus-Leitung 22 wurde in die Anschlusszunge 44 eingelegt und durch eine Quetschung des Kragens 42 festgequetscht.

Der Durchführungskondensator 48 wurde elektrisch wie folgt beschaltet: Der erste Pol seiner ersten Zuführung wurde mit dem ersten Anschlussleitungsabschnitt 50 verbunden und der zweite Pol der ersten Zuführung mit dem zweiten Anschlussleitungsabschnitt 52. Die beiden Pole der zweiten Durchführung stehen in elektrischem Kontakt zur Wanne 40 des Masseblechs 34. Ein Störsignal, welches entlang der Plus-Leitung 20 propagiert, wird vom Durchführungskondensator 48 gedämpft oder ausgelöscht, sodass eine Weiterleitung des Störsignals an den ersten Anschlussleitungsabschnitt 50 verringert oder unterdrückt wird. Störsignale, die entlang der Minus-Leitung 22 propagieren, werden durch die mittels des Kragens 42 bewirkte Kontaktierung auf den elektrischen Leiter 24 der Minus-Leitung 22 auf das Masseblech 34 abgeleitet, da das Masseblech 34 mit seiner Anbindung an die Masse des elektrischen Gesamtsystems als Spannungssenke für jegliche Spannung, also auch für die Spannung der Störsignale, anzusehen ist.

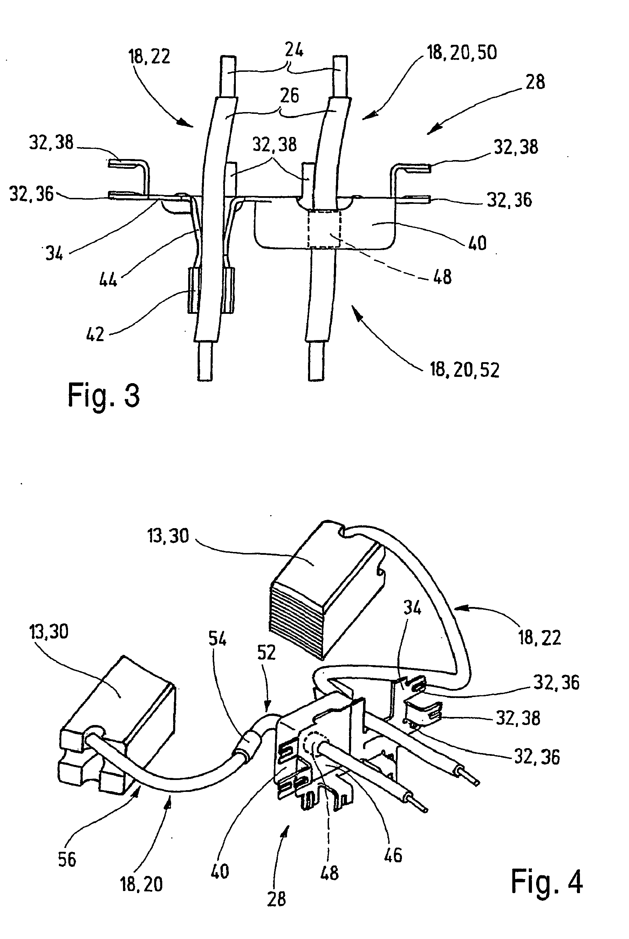

Die Figur 3 verdeutlicht in einer Draufsicht auf die Entstörvorrichtung 28 die Führung der Plus-Leitung 20 und der Minus-Leitung 22. Es ist dabei zu erkennen, dass der erste Anschlussleitungsabschnitt 50 anschlussseitig am Durchführungskondensator 48 angeordnet ist. Anschlussseitig bedeutet dabei, dass der erste Anschlussleitungsabschnitt 50 einer den Gleichstrommotor 1 mit Energie versorgenden Energiequelle zugeordnet ist. Der zweite Anschlussleitungsabschnitt 52 ist gehäuseinnenseitig an den Durchführungskondensator 48 angeschlossen. Die Minus-Leitung 22 liegt auf der Anschlusszunge 44 auf und wird dort vom Kragen 42 fixiert.

Ein weiteres nicht erfindungsgemäßes Ausführungsbeispiel zeigt die Figur 4. Hier wurden die Kontaktelemente 13 an die gehäuseinnenseitigen Enden der Anschlussleitungen 18 angeklemmt. Bei diesem Ausführungsbeispiel wurde das positive Kontaktelement 13 zunächst mit einer Kontaktelementzuleitung 56 versehen und dann über ein Verbindungselement 54 mit dem zweiten Anschlussleitungsabschnitt 52 elektrisch verbunden. Diese zunächst zweistückige Fertigung, der dann ein Verbindungsschritt folgt, kann je nach Ausrichtung der Fertigungsstrategien vorteilhaft sein. Genauso kann aber eine einstückige Fertigung ohne das Verbindungselement 54 gewählt werden.

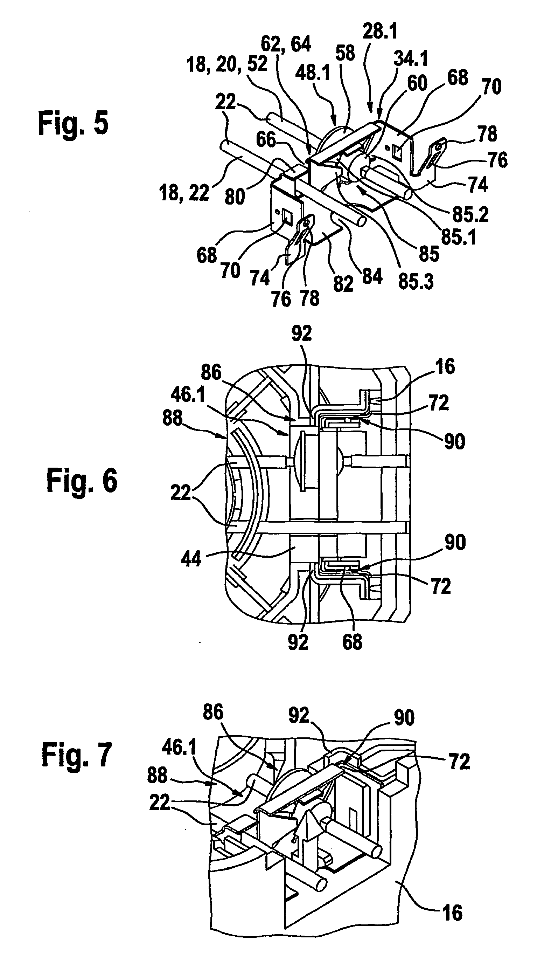

Die Figuren 5, 6 und 7 zeigen eine erfindungsgemäbe Entstörvorrichtung 28.1., die ein abgewandeltes Masseblech 34.1 und einen Durchführungskondensator 48.1, der an und für sich bekannt ist, umfasst.

Der Durchführungskondensator 48.1 umfasst einen ersten zylindrischen Abschnitt 58 und einen sich daran anschließenden zylindrischen Abschnitt 60 mit einem geringeren Durchmesser.

Das Masseblech 34.1 ist im Wesentlichen wannenförmig mit einem im Wesentlichen rechteckigen Boden 62. Der Boden 62 hat einen ersten Durchbruch 64 für den Durchführungskondensator 48.1 und einen zweiten Durchbruch 66 für die Minus-Leitung 22. An den kurzen Seiten des Bodens 62 schließen sich zwei rechtwinklig zum Boden 62 aber parallel zueinander ausgerichteten Seitenwänden 68 an. In den Seitenwänden 68 sind Einrastöffnungen 70 für Haltehaken 72 (Figur 6) ausgebildet. Von den Seitenwänden 68 stehen voneinander weg gerichtete, zum Boden 62 parallel verlaufende Abschnitte 74 ab, an die sich jeweils eine Federzunge 76 anschließt. Die Federzungen 76 verlaufen schräg zum Boden 62 und entfernen sich im unmontierten Zustand von ihm. An ihren Enden weisen die Federzungen 76 Kontaktabschnitte 78 auf.

An den beiden Längsseiten des Bodens 62 stehen rechtwinklig zum Boden 62 aber parallel zueinander, weitere Seitenwände 80, 82 ab. Die Seitenwand 80 ist nicht so hoch wie die Seitenwand 82. Außerdem verläuft der zweite Durchbruch 66 auch durch die Seitenwand 80. Die Seitenwand 82 weist an ihrem vom Boden 62 entfernten Rand eine Ausnehmung 84 auf.

Die Seitenwände 68, 80, 82 sind an ihren benachbarten Längsseiten jeweils durch einen Schlitz 83 voneinander getrennt, so dass eine einfache Stanzbiegeherstellung möglich ist. Sie könnten jedoch auch miteinander verbunden sein, beispielsweise, wenn das Masseblech 34.1 tiefgezogen ist.

Der erste Durchbruch 64 hat an seinen Rändern mehrere schräg abstehende, in das Innere des Masseblechs 24.1 gerichtete Laschen 85.1, 85.2, 85.3. Vier sich paarweise gegenüberliegende Laschen 85.1 dienen als Einführschrägen für den Durchführungskondensator 48.1. Zwei weitere sich diametral gegenüberliegende Laschen 84.2, die vorzugsweise länger als die Laschen 85.1 sind und weiter in den ersten Durchbruch 64 hineinragen, dienen als Zentrierhilfe für den Durchführungskondensator 48.1. Zwei weitere sich diametral gegenüberliegende Laschen 85.3, die vorzugsweise länger als die Laschen 85.2 sind und noch weiter in den ersten Durchbruch 64 hineinragen, dienen als Widerhaken für den Durchführungskondensator 48.1. Der Durchführungskondensator 48.1 wird von der Unterseite her in das Masseblech 34.1 eingesteckt. Damit ist eine sichere, positionsgenaue und rüttelfeste Befestigung des Durchführungskondensators 48.1 möglich.

Das Masseblech 34.1 ist in einer Aufnahme 86 eines Bürstenhalters 88 befestigt. Statt des bevorzugten Bürstenhalters 88 kann jedoch auch ein anderes Halteelement vorgesehen sein. Die Entstörvorrichtung 28.1 ist nach der Montage durch den Bürstenhalter 88 im Bereich der Polgehäuseöffnung 16 gehalten, wodurch die Anschlussleitungen 18 aus dem Gleichstrommotor 1 heraus geführt sind.

Die Aufnahme 86 hat zwei parallele Schlitze 90, in denen die Seitenwände 68 mittels der Haltehaken 72 und der Einrastöffnungen 70 gehalten sind. Die Schlitze 90 verlaufen senkrecht zur Polgehäuseöffnung 16. An ihre von der Polgehäuseöffnung 16 abgewandten Enden schließen sich senkrecht zu den Schlitzen 90 verlaufende Wände 92 an, die am Boden 62 des Masseblechs 34.1 zur Anlage, wodurch die Kontaktabschnitte 78 gegen das Polgehäuse 10 gedrückt werden. Der Abstand der Wände 92 zum Polgehäuse 10 ist geringer als der Abstand der Kontaktabschnitte 78 zum Boden 62 im nicht montierten Zustand des Masseblechs 34.1. Dadurch werden die Kontaktabschnitte 78 sicher an das Polgehäuse 10 gedrückt und ein elektrischer Kontakt hergestellt. Insofern sind die Kontaktabschnitte 78 bzw. Federzungen 76 Halteelemente in Form von Blechlappen zum Klemmen des Masseblechs 24.1 an der Polgehäuseöffnung 16.

Mit der Seitenwand 82 liegt die Entstörvorrichtung 28.1 axial am Bürstenhalter 88 an. An der Seitenwand 80 kommt ein nicht dargestellter Lagerbügel zur Anlage, wodurch die Entstörvorrichtung 28.1 fixiert wird. Durch die Ausnehmung 84 ragt ein Dom 94 des Bürstenhalters 88.

## Patentansprüche

1. Gleichstrommotor (1), insbesondere für eine Gebläseeinrichtung eines Kraftfahrzeugs, mit einem Polgehäuse (10), mehreren die Kontaktierung zu einem Kollektor (12) bewirkenden Kontaktelementen (13), einer die Durchführung elektrischer Anschlussleitungen (18) in das Polgehäuse (10) ermöglichenden Polgehäuseöffnung (16) und einer der Reduzierung und/oder Eliminierung von leitungsgebundenen elektrischen Störsignalen dienenden Entstörvorrichtung (28,28.1), wobei die Entstörvorrichtung (28,28.1) mindestens einen Durchführungskondensator (48,48.1) aufweist, der in einem elektrischen Pfad mindestens einer Anschlussleitung (18) angeordnet ist und die Entstörvorrichtung (28,28.1) mittels Kontaktabschnitten (78) elektrisch mit dem Polgehäuse (16) verbunden ist und ein Masseblech (34,34.1) aufweist, welches dem Durchführungskondensator (48,48.1) zugeordnet ist, **dadurch gekennzeichnet, dass** die Entstörvorrichtung (28.1) an einem Bürstenhalter (88) angeordnet ist, wobei in dem Masseblech (34,34.1) wenigstens ein Durchbruch (64) für den Durchführungskondensator (48.1) ausgebildet ist

2. Gleichstrommotor nach Anspruch 1, **dadurch gekennzeichnet, dass** die Entstörvorrichtung (28, 28.1) der Polgehäuseöffnung (16) zugeordnet ist.

3. Gleichstrommotor nach einem der vorhergehenden Ansprüche, **dadurch gekennzeichnet, dass** die Kontaktelemente (13), insbesondere in der Ausführung als Kohlekontakte beziehungsweise Kohlebürsten (30), mit den Anschlussleitungen (18) form- und/oder kraftschlüssig verbunden sind.

4. Gleichstrommotor nach einem der vorhergehenden Ansprüche, **dadurch gekennzeichnet, dass** das Masseblech (34, 34.1) mit Halteelementen (31), insbesondere Blechlappen (32, 76), zum Einschieben, Klemmen und/oder Stecken in die Polgehäuseöffnung (16) ausgebildet ist.

5. Gleichstrommotor nach einem der vorhergehenden Ansprüche, **dadurch gekennzeichnet, dass** die Anschlussleitungen (18) zur Reduzierung einer Schallübertragung zumindest abschnittsweise flexibel ausgebildet sind.

6. Gleichstrommotor nach einem der Ansprüche 1 bis 5, **dadurch gekennzeichnet, dass** eine dem Anschluss an ein negatives Spannungspotenzial dienende Anschlussleitung (22) (Minus-Leitung) einen elektrischen Kontakt zum Masseblech (34, 34.1) aufweist.

7. Gleichstrommotor nach Anspruch 6, **dadurch gekennzeichnet, dass** das Masseblech (34, 34.1) eine Anschlusszunge (44) zur elektrischen Kontaktierung und/oder Zugentlastung der Minus-Leitung (22) aufweist.

8. Gleichstrommotor nach einem der vorhergehenden Ansprüche, **dadurch gekennzeichnet, dass** jeder Anschlussleitung (18) ein Durchführungskondensator (48) zugeordnet ist.

9. Gleichstrommotor nach Anspruch 8, **dadurch gekennzeichnet, dass** die Entstörvorrichtung (28.1) mit zwei Seitenwänden (68) in Schlitzen (90) einer Aufnahme (88) des Halters (88) angeordnet ist, wobei in den Seitenwänden (68) vorzugsweise Einrastöffnungen (70) für Rasthaken (72) der Aufnahme (88) angeordnet sind.

10. Gleichstrommotor nach Anspruch 1, 8 oder 9, **dadurch gekennzeichnet, dass** der Durchbruch (64) mit Laschen (85.1, 85.2, 85.3) zum Einfügen, Zentrieren und/oder Verrasten des Durchführungskondensators (48.1) versehen ist.

11. Gleichstrommotor nach einem der Ansprüche 8 bis 10, **dadurch gekennzeichnet, dass** die Kontaktabschnitte (78) an Federzungen (76) angeordnet sind.

## Claims

1. Direct-current motor (1) in particular for a fan device in a motor vehicle, having a pole housing (10), a plurality of contact elements (13) which make contact with a commutator (12), a pole housing opening (16) which allows electrical connecting lines (18) to be passed through into the pole housing (10), and a suppression apparatus (28, 28.1) which is used to reduce and/or eliminate conducted electrical interference signals, wherein the suppression apparatus (28, 28.1) has at least one bushing capacitor (48, 48.1) which is arranged in an electrical path of at least one connecting line (18), and the suppression apparatus (28, 28.1) is electrically connected to the pole housing (10) by means of contact sections (78) and has an earth plate (34, 34.1) which is associated with the bushing capacitor (48, 48.1), **characterized in that** the suppression apparatus (28, 28.1) is arranged on a brush holder (88), wherein at least one aperture (64) for the bushing capacitor (48.1) is formed in the earth plate (34, 34.1).

2. Direct-current motor according to Claim 1, **characterized in that** the suppression apparatus (28, 28.1) is associated with the pole housing opening (16).

3. Direct-current motor according to one of the preceding claims, **characterized in that** the contact elements (13) are connected in an interlocking and/or force-fitting manner to the connecting lines (18), in particular in the version as carbon contacts or carbon brushes (30).

4. Direct-current motor according to one of the preceding claims, **characterized in that** the earth plate (34, 34.1) has holding elements (31), in particular sheet-metal flaps (32, 76), for insertion, clamping and/or plugging into the pole housing opening (16).

5. Direct-current motor according to one of the preceding claims, **characterized in that** the connecting lines (18) are flexible, at least in places, in order to reduce sound transmission.

6. Direct-current motor according to one of Claims 1 to 5, **characterized in that** a connecting line (22) (negative line) which is used for connection to a negative voltage potential makes an electrical contact with the earth plate (34, 34.1).

7. Direct-current motor according to Claim 6, **characterized in that** the earth plate (34, 34.1) has a connecting tongue (44) for making electrical contact with and/or for strain relief for the negative line (22).

8. Direct-current motor according to one of the preceding claims, **characterized in that** each connecting line (18) has an associated bushing capacitor (48).

9. Direct-current motor according to Claim 8, **characterized in that** the suppression apparatus (28.1) is arranged with two side walls (68) in slots (90) in a receptacle (88) in the holder (88), wherein latching-in openings (70) for latching hooks (72) on the receptacle (88) are preferably arranged in the side walls (68).

10. Direct-current motor according to Claim 1, 8 or 9, **characterized in that** the aperture (64) is provided with lugs (85.1, 85.2, 85.3) for insertion, centring and/or latching of the bushing capacitor (48.1).

11. Direct-current motor according to one of Claims 8 to 10, **characterized in that** the contact sections (78) are arranged on spring tongues (76).

## Revendications

1. Moteur (1) à courant continu, en particulier pour le système de ventilation d'un véhicule automobile, doté
d'un boîtier polaire (10),
de plusieurs éléments de contact (13) qui assurent la mise en contact avec un collecteur (12),
d'une ouverture (16) ménagée dans le boîtier polaire et permettant de faire passer des conducteurs (18) de raccordement électrique dans le boîtier polaire (12) et
d'un dispositif de déparasitage (28, 28.1) qui sert à réduirte ou à éliminer les signaux électriques parasites associés au conducteur,
le dispositif de déparasitage (28, 28.1) présentant au moins un condensateur de passage (48, 48.1) disposé dans le parcours électrique d'au moins un conducteur de raccordement (18),
le dispositif de déparasitage (28, 28.1) étant relié électriquement au boîtier polaire (10) par des segments de contact (78) et présentant une tôle de masse (34, 34.1) associée au condensateur de passage (48, 48.1),
**caractérisé en ce que**
le dispositif de déparasitage (28.1) est disposé sur un porte-balais (88), au moins une perforation (64) étant formée pour le condensateur de passage (48.1) dans la tôle de masse (34, 34.1).

2. Moteur à courant continu selon la revendication 1, **caractérisé en ce que** le dispositif de déparasitage (28, 28.1) est associé à l'ouverture (16) ménagée dans le boîtier polaire.

3. Moteur à courant continu selon l'une des revendications précédentes, **caractérisé en ce que** les éléments de contact (13) sont reliés en correspondance géométrique et/ou en correspondance mécanique aux conducteurs de raccordement (18), en particulier dans le mode de réalisation sous la forme de charbons de contact ou de brosses de charbons (30).

4. Moteur à courant continu selon l'une des revendications précédentes, **caractérisé en ce que** la tôle de masse (34, 34.1) est configurée avec des éléments de maintien (31), en particulier des pattes de tôle (32, 76) destinées à être insérées, serrées et/ou enfichées dans l'ouverture (16) ménagée dans le boîtier polaire.

5. Moteur à courant continu selon l'une des revendications précédentes, **caractérisé en ce qu'**au moins certaines parties des conducteurs de raccordement (18) sont flexibles pour réduire la transmission des bruits.

6. Moteur à courant continu selon l'une des revendications 1 à 5, **caractérisé en ce qu'**un conducteur de raccordement (22) (négatif) qui sert au raccordement à un potentiel de tension négative présente un contact électrique avec la tôle de masse (34, 34.1).

7. Moteur à courant continu selon la revendication 6, **caractérisé en ce que** la tôle de masse (34, 34.1) présente une patte de raccordement (44) qui permet d'établir le contact électrique et/ou de délester en traction le conducteur négatif (22).

8. Moteur à courant continu selon l'une des revendications précédentes, **caractérisé en ce qu'**un condensateur de passage (48) est associé à chaque conducteur de raccordement (18).

9. Moteur à courant continu selon la revendication 8, **caractérisé en ce que** le dispositif de déparasitage (28.1) est disposé avec deux parois latérales (68) dans des fentes (90) d'un logement (88) du support (88), des ouvertures d'encliquetage (70) étant de préférence disposées dans les parois latérales (68) pour permettre d'accrocher élastiquement (72) le logement (88).

10. Moteur à courant continu selon les revendications 1, 8 ou 9, **caractérisé en ce que** la perforation (64) est dotée de pattes (85.1, 85.2, 85.3) destinées à insérer, centrer et/ou encliqueter le condensateur de passage (48.1).

11. Moteur à courant continu selon l'une des revendications 8 à 10, **caractérisé en ce que** les segments de contact (78) sont disposés sur des languettes élastiques (76).
